# EUROPEAN PATENT SPECIFICATION

(11) **EP 0 364 098 B1**
(45) Date of publication and mention of the grant of the patent: **04.05.1994**
(21) Application number: 89309185.0
(22) Date of filing: 11.09.1989
(51) Int. Cl.: C08F 4/02

(54) **A method for the preparation of a carrier for a zieglernatta polymerization catalyst, a carrier prepared using the method, and its use in a polymerization catalyst system**
Verfahren zur Herstellung von Trägern für Ziegler-Natta-Polymerisationskatalysatoren, nach dem Verfahren hergestellte Träger und deren Verwendung in Polymerisationskatalysatorsystemen
Procédé de préparation d'un support d'un catalyseur Ziegler-Natta de polymérisation, support préparé par le procédé, et son application aux systèmes de catalyseurs de polymérisation

(30) Priority: 28.09.1988 FI 884444
(43) Date of publication of application: 18.04.1990
(73) Proprietor: NESTE OY, SF-06850 Kulloo (FI)
(72) Inventor: Garoff, Thomas, SF-00840 Helsinki (FI); Eloranta, Kirsi, SF-06150 Porvoo (FI)
(74) Representative: Browne, Robin Forsythe, Dr.

(56) References cited:
- FR-A- 2 434 180
- CHEMICAL ABSTRACTS, vol. 105, no. 12, Columbus, Ohio, USA ref. no. 98129H

## Description

The invention relates to a method for preparing a carrier, having activating capacity, for a Ziegler-Natta type polymerization catalyst by modifying its structure chemically and physically, a catalyst prepared using such a method, and the use of such a carrier in a Ziegler-Natta type polymerization catalyst system.

In the preparation of Ziegler-Natta polymerization catalysts it is conventional to use for improving the polymerization activity of the catalysts an inert carrier compound on which the actual catalytic component is formed. Such carrier compounds include both chemically inert carriers and carriers having reactive chemical groups on their surface or inside the supporting structure. Magnesium compounds, such as oxides, oxyhalides, and halides have proven to be important carrier compounds; the last-mentioned, specifically magnesium chloride, have recently become the most important carrier compounds for isospecific catalysts.

The activity and stereospecificity of a catalyst is largely dependent on the morphology of the carrier compound, i.e. on how the active groups of the catalyst compounds, deposited on the surface of the carrier, can settle in positions effective in terms of activity and stereospecificity. Although a sufficiently fine division of the carrier significantly enhances activity, the shape of the carrier particles, determined by the structure of their crystal lattice, also greatly affects the activity of the catalyst. Efforts have been made to control and improve this particle structure by both physical and chemical means.

The carrier has been ground by different methods, for example in a ball mill, in order to produce the desired crystal structure. In such a case the magnesium halide, especially magnesium chloride, is ground in a ball mill together with an electron donor and possibly with other compounds, even together with the final catalyst components. As the result of the ball mill grinding there is obtained a finely-divided powder which has typically a large specific surface area and the particles of which have a deformed crystal lattice. When the powder is activated, for example by deposition with a transition metal compound and by reduction with an organometallic compound, a highly active polymerization catalyst is obtained. The disadvantage of such a catalyst without further treatment is its relatively low stereospecificity, and a polypropylene prepared using the catalyst may, for example, contain an amorphous, atactic fraction up to 50 %.

Efforts have also been made to improve the particle structure of the carrier by chemical means. For example, magnesium halides have been prepared from organometallic magnesium compounds such as Grignard reagents, which have been halogenated by various methods and in the presence of various auxiliary agents. Grignard reagents are compounds of magnesium with a halogen, an organic group and an electron donor, and they are capable of reacting specifically with halogenation reagents in such a manner that activity- and stereospecificity-enhancing magnesium halides are formed. However, Grignard reagents are expensive and highly sensitive reagents which by no means always become halogenated in the desired manner.

Thus the carrier grinding and manufacturing methods according the state of the art are often very expensive and do not always lead to a suitable system of catalyst activity and stereospecificity.

The purpose of the present invention is to provide a new method for the preparation of a reactive magnesium halide or corresponding carrier for a Ziegler-Natta type polymerization catalyst, eliminating the above-mentioned disadvantages.

In one aspect, the invention provides a method of preparing a carrier, having activating capacity, for a Ziegler-Natta type polymerization catalyst by modifying its structure chemically and physically, which includes the steps of:
(a) melting separately a carrier material and a substance which is complexable with the carrier material,
(b) reacting the carrier material and the complexable substance while molten, while a stream of an inert gas is directed at the reaction mixture, the gas flow bringing the reaction mixture into the form of a spray of droplets,
(c) cooling the reaction product to form a particulate, thermally decomposable complex compound or complex salt, and
(d) heat-treating the said complex compound or complex salt to separate at least the complexable substance in part or completely from the carrier material.

In the reaction and cooling steps of the method, it is important to produce a particulate complex compound or complex salt, having a suitable morphology, since morphology determines the activity of the catalyst and the stereospecificity of the formed polymer; furthermore, the form and particle size distribution of the carrier particles is repeated in the structure of the finished catalyst and ultimately in the product polymerized using the catalyst in question (the so-called replica phenomenon). It is also indispensable that the complex compound or complex salt is thermally decomposable, since only then will the complexed substance or part of it detach and separate from it and the carrier convert to a form in which it can be suitably activated.

The reaction of formation of the complex compound or combination salt may be any reaction in which the carrier and the substance complexable with it are capable of reacting with each other to form a thermally decomposable product. At the end of the reaction the formed complex compound or combination salt is brought into a finely-divided, solid form which fulfils the requirements set on a carrier. This may be done, for example by controlled precipitation or crystallization, but it may also be done by forming from the molten reaction product finely-divided drops which are then rendered solid in a suitable manner.

The finely-divided product is such that under the effect of heat it converts to a reactive carrier. The heat treatment can be carried out by, for example, drying in such a manner that the agent which has modified the carrier and rendered it reactive, and possible the water of crystallization, evaporate out from the solid carrier particles. As a consequence of the heating there remain in the carrier particles structural irregularities, which improve both the ability of the carrier to be activated and the activity of the finished catalyst. Thus, what is in question is completely new method of enhancing the activity of a Ziegler-Natta type polymerization catalyst
Magnesium dichloride hexahydrate, which has preferably six groups of water of crystallization, is an advantageous carrier raw material. Magnesium dichloride hexahydrate melts at 118°C, and so it has to be heated to a temperature above 118°C, preferably to 130-140°C. An ammonium compound, such as ammonium chloride, to which a solvating agent such as water has been added to facilitate melting, preferably at a ratio of 1:1, is an advantageous complexable substance. An ammonium chloride which contains water at a ratio of 1:1 melts at about 100°C, in which case the heating is carried out to above 100 °C, preferably to approximately 110-130 °C.

It itself the reaction between MgCl₂ and NH₄Cl is known from Patent PL 127892, but in it atomization is not used simultaneously; the reactants are merely mixed with each other, and atomization is no longer possible after the reaction, since the formed complex salt between MgCl₂ and NH₄Cl is a solid substance which does not melt but decomposes when heated, and only a molten substance can be atomized.

Thereafter the molten magnesium dichloride hexahydrate and the molten ammonium chloride solvated with water are contacted with each other, preferably by feeding them from separate nozzles to form a joint molten reaction mixture. The feeding pressure of the reaction components and the nozzles are designed so that the stoichiometric conditions for the formation of a suitable complex compound or complex salt are fulfilled and that a physically suitable reaction mixture is obtained. When magnesium dichloride hexahydrate and ammonium chloride are used, a complex salt MgCl₂ (NH₄Cl) 6 H₂O is formed, which contains ammonium chloride 21 % by weight and magnesium dichloride hexahydrate salt 79 % by weight. Since the melt density of each of the salts is approximately 1.5 g/ml, in the atomization these salts should be fed in at the above-mentioned ratio. This can be achieved by using, for example, a thicker feeder pipe for the magnesium salt. It has also been observed that it is advantageous to use a small excess of ammonium chloride in the method.

The reaction components are preferably allowed to run by the force of gravity from the nozzles, whereby they form an even flow. The flows are allowed to run together immediately outside the nozzle openings. It is advantageous to aim a gas flow at the point where the flows run together; by means of this gas flow the said components are atomized in such a manner that, having reacted with each other, they form after the atomization mainly round and mechanically durable particles, which are highly suitable carriers for a polymerization catalyst. The gas used for this purpose is inert with respect to the substances present and has such a density that the necessary atomization and/or fluidizing action is produced. For example, nitrogen gas is an advantageous gas.

The reaction mixture in the form of molten drops is then solidified for example by fluidizing the drops in a gas flow or by directing them by means of a gas flow against a separate, cold recovery medium. According to one preferred embodiment, the gas flow which draws the melt drops along with it is directed against a cold heptane solution which is maintained in continuous motion by stirring.

The atomized and crystallized intermediate product for a carrier, preferably a complex compound and combination salt of magnesium dichloride hexahydrate and ammonium chloride, is thereafter separated from the possible recovery medium, is washed when necessary, and is dried in a flow of inert gas. The complex salt is now ready for the second stage, in which it is treated with heat to increase its reactivity.

The step of the method according to the present invention, which involves heat treatment of the complex compound
or complex salt, is carried out at that temperature at which the complexable substance and the possible water of crystallization are in part or entirely detached and separated from the carrier, without the structure of the carrier changing at any other points. The principle in this is to produce an irregular morphology, which will improve the ability of the carrier to be activated and increase the activity of the entire catalyst. When a complex salt of magnesium dichloride hexahydrate and ammonium chloride is involved, it is first dried in order to remove the water of crystallization, for example under vacuum at a temperature of 200 °C for approximately one hour. Thereafter the complex salt is further heated to remove the complexable ammonium chloride. These more drastic conditions are, for example, six hours at 405 °C and in a continuous nitrogen flow.

The invention also relates to a new reactive carrier for a Ziegler-Natta type polymerization catalyst, which carrier is prepared by causing the carrier and a substance complexable with it to react with each other in order to form a thermally decomposable particulate complex compound or complex salt, and by treating the thus formed complex compound or complex salt with heat in order to separate the complexable substance in part or completely from the said carrier. Since what is in question is the changing of the carrier morphology in part or completely, without permanently changing its chemical composition, the carrier can in this context be characterized only by means of the treatment it is subjected to. It is, however, evident that the carrier according to the present invention has a morphology different from that of ordinary magnesium dichloride and also different from those of prior-art magnesium chloride and other corresponding carriers, ground or prepared from Grignard reagents. The carrier according to the present invention is advantageously both crystalline and active (cf. Example 1).

The invention further relates to the use of the new, reactive carrier in a Ziegler-Natta catalyst. This concerns both its use for the preparation of the said polymerization catalyst and its use as an essential constituent of the polymerization catalyst in polymerization processes.

The carrier according to the invention is used in Ziegler-Natta catalysts which contain a transition metal compound of the Periodic Element Table groups IV and VI and an organometallic compound according to groups I-III, and possibly other compounds such as electron donors, etc. When the carrier is activated, for example by deposition with a transition metal compound and by reduction with an organometallic compound, a highly active polymerization catalyst is obtained. An electron donor increasing the activity and stereospecificity of the catalyst can be added to the carrier at some stage of its preparation process or at a later stage, for example, the deposition or the reduction stage. An especially effective catalyst is obtained when the transition metal compound is a titanium compound, preferably titanium tetrachloride. The deposition with a transition metal compound can be carried out several times in order to obtain a layer of a suitable thickness on the carrier surface.

Advantageous electron donor compounds include the esters, ethers and diamines of organic acids. Aromatic esters, such as di-isobutyl phthalate, are especially advantageous. The reduction with an organometallic compound is usually not carried out until the polymerization stage, in which case an aluminum compound having one or several alkyl groups, such as triethyl aluminum, is advantageous for this purpose. In connection with polymerization it is also possible to add to the catalyst mixture a so-called external donor in order to increase its activity and/or stereospecificity. One such external donor is diphenyl dimethoxysilane.

Below, general instructions are first given for the preparation of a carrier according to a preferred embodiment of the invention, for its use for the preparation of a Ziegler-Natta catalyst, and for test polymerization of the thus produced catalyst.

### Preparation of the carrier

Magnesium dichloride hexahydrate was fed into a tank, in which it was melted by heating it to a temperature of 130-140 °C and was thereafter maintained at that temperature. Ammonium chloride was added into a second tank, into which water was also added at a molar ratio of approximately 1:1. The ammonium chloride solvated with water was melted by heating to a temperature of 110-130 °C and was maintained at that temperature. Thereafter the nozzles of the melt feeder pipes at the lower ends of both tanks were opened, and time was allowed to elapse until there was an even flow from the nozzles. The flows were allowed to run together immediately outside the nozzle openings. A flow of inert gas was directed at the confluence point. The flow which drew the melt drops along with it was directed against a cold heptane solution. The heptane solution was maintained in continuous motion by stirring. The atomized and crystallized carrier was separated from the heptane solution and was dried in a nitrogen gas flow. Thus an atomized and crystallized MgCl₂ (NH₄Cl) 6H₂O complex salt having the desired carrier morphology was obtained.

The atomized and crystallized, finely-divided complex salt was first dried under vacuum at a temperature of 200 °C for one hour, whereby a substantial proportion of the water of crystallization was detached from the salt. Thereafter the salt was maintained for six hours at a temperature of 450 °C in a continuous nitrogen flow, at which time all of the ammonium chloride detached from the salt. The result was a magnesium chloride, ready for catalyst synthesis, which contained vacancies left by the ammonium chloride and had an advantageous morphology.

### Catalyst synthesis

In the synthesis, approximately 10 g of an atomized and crystallized complex salt was weighed into a synthesis vessel in a nitrogen cupboard, and then 200 ml of dried heptane was added while stirring. 300 ml of titanium tetrachloride and 1.5 ml of di-isobutyl phthalate electron donor were added in drops to the mixture while stirring continuously.

The temperature was raised to 100 °C or to a temperature at which the solution refluxed. The mixture was kept at this temperature for one hour.

The heating and mixing apparatus are removed, and the formed catalyst is allowed to settle on the bottom of the synthesis vessel. The settling may, when necessary, be promoted by adding heptane, whereupon the density of the solution decreases and the precipitate settles better. By means of a slight nitrogen overpressure, which is produced by closing the outlet pipe of the bypass vessel, the solution is transferred through a teflon tube out of the synthesis vessel.

A new 300 ml batch of titanium tetrachloride is added into the synthesis vessel, and the obtained solution is heated to 110 °C or until the solution clearly begins to reflux. The temperature is maintained at this value for one hour. The catalyst precipitate is again allowed to settle and the liquid is removed from above it through the teflon tube.

300 ml of heptane is poured into the synthesis vessel, and the mixture is heated until it clearly begins to reflux. The refluxing is continued at about 90 °C for 15 min, whereafter the catalyst is allowed to settle and the scrubbing solution is transferred into a waste bottle. Such scrubbing is repeated six times, and the catalyst is dried in a nitrogen gas flow. When combined with an organoaluminum compound used as a cocatalyst, the Ziegler-Natta catalyst thus obtained is highly suitable for the polymerization of propylene.

### Test polymerization on propylene

The test polymerization of propylene is carried out in a 3-liter bench reactor. The medium used is heptane. The medium has been dried in a molecular sieve before use. 1200 ml of the medium is placed in the reactor. The catalyst is used in an amount of 30-300 mg, depending on the activity of the catalyst. The required amount is weighed into a septum flask. The cocatalyst used is triethyl aluminum. It is added at a ratio to the titanium amount in the catalyst so that the Al/Ti ratio is 200. The external donor (diphenyldimethoxysilane) is added at a ratio of Al/D2 = 20.

The catalyst, the aluminum alkyl and the donor are all added into a feeder ampoule, which is connected to the reactor. A further 50 ml of heptane is added into the ampoule to promote the feeding. The feeding takes place with the aid of a gas flow. Before the starting of the polymerization, the necessary hydrogen partial pressure is added. The polymerization itself takes place at a temperature of 50 °C. The polymerization period is three hours. After three hours of polymerization the polymer is filtered out from the medium and is dried, whereafter the polymerization yield is determined.

The invention is illustrated with the help of the following examples.

### Example 1

The atomization was carried out in such a manner that magnesium salt was fed in at 70 % and ammonium salt at 30 %. The product was of a good quality. The carrier was heat-treated according to the synthesis instructions given above. 7.1841 g of the heat-treated salt was weighed for the catalyst synthesis. The synthesis was carried out according to the above instructions. 5.0334 g of a catalyst was obtained. Its chemical composition was 1.3 % Ti, 23.0 % Mg and 66.0 % Cl. An X-ray diffraction of the catalyst showed that the material was crystalline magnesium dichloride (Figure). The activity of the catalyst was 2.5 kg PP/g of catalyst. In their outer appearance the polymer particles were regular spheres.

### Example 2

Both salts were fed in from feeder pipes of the same size. The mass ratio was thus 1:1. The quality of the atomized product was good, although ammonium chloride was present in excess. The complex salt did not melt in the heat treatment. 9.2518 g of the carrier was treated according to the synthesis instructions given above. The product obtained was 5.0029 g of a catalyst having the composition Ti 1.8 %, Mg 22.5 % and Cl 67 %. An X-ray diffraction of the catalyst showed that it consisted of crystalline (alpha form) magnesium dichloride. The activity of the catalyst was 2.3 kg PP/g of catalyst in three hours. The morphology of the polymer was good: spherules of an even size.

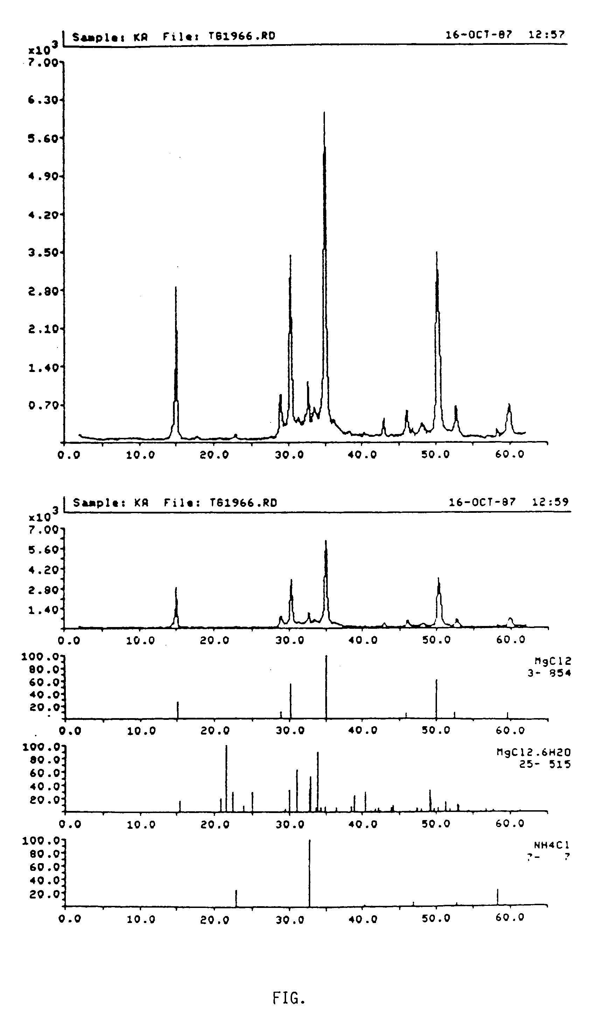

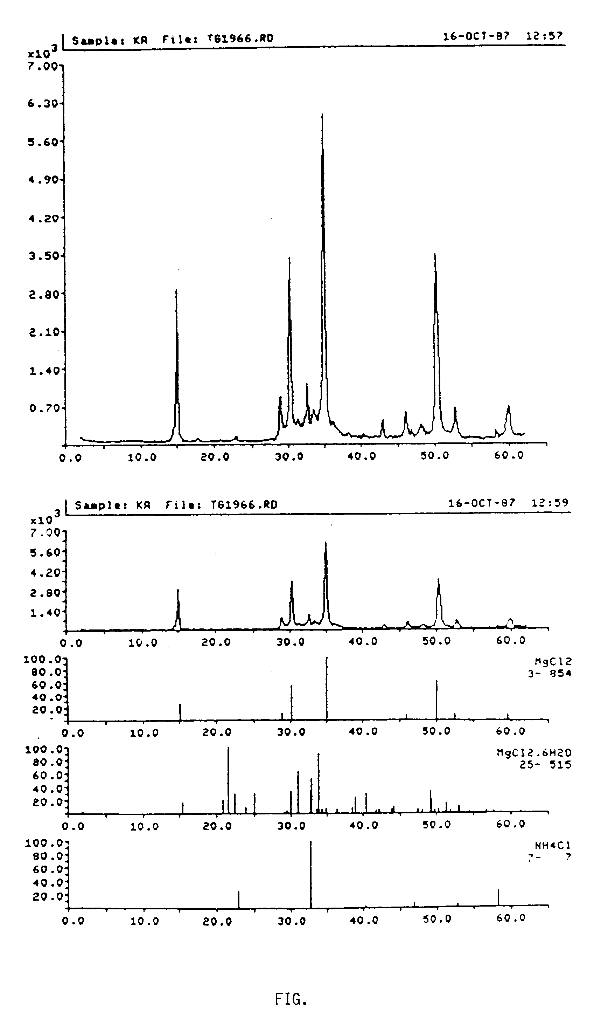

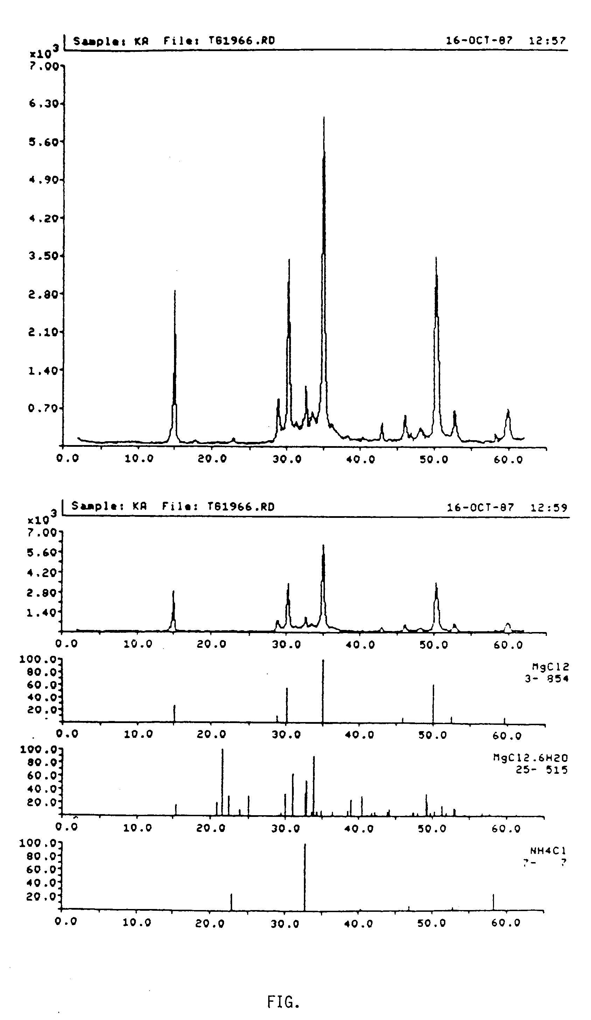

## Claims

1. A method of preparing a carrier, having activating capacity, for a Ziegler-Natta type polymerization catalyst by modifying its structure chemically and physically, which includes the steps of:
(a) melting separately a carrier material and a substance which is complexable with the carrier material,
(b) reacting the carrier material and the complexable substance while molten, while a stream of an inert gas is directed at the reaction mixture, the gas flow bringing the reaction mixture into the form of a spray of droplets,
(c) cooling the reaction product to form a particulate, thermally decomposable complex compound or complex salt, and
(d) heat-treating the said complex compound or complex salt to separate at least the complexable substance in part or completely from the carrier material.

2. A method as claimed in claim 1, in which the carrier material is a magnesium compound, preferably the hexahydrate of magnesium dichloride.

3. A method as claimed in claim 1 or claim 2, in which the compound complexable with the carrier material is an ammonium compound, preferably ammonium chloride.

4. A method as claimed in any one of the above claims, in which the carrier material is hexahydrate of magnesium dichloride and the compound complexable with it is ammonium chloride, in which case in stage (b) there is formed a complex salt having the formula MgCl₂/(NH₄Cl).6H₂O.

5. A method as claimed in claim 4, in which the hexahydrate of magnesium dichloride is melted separately to a temperature which is above 118°C, preferably within the range of 130 to 140°C, and that water is added to the ammonium chloride, preferably at a ratio of approximately 1:1, and this mixture is heated separately to a temperature which is above approximately 100°C, preferably within the range 110 to 130°C.

6. A method as claimed in claim 4 or claim 5, in which thee hexahydrate of magnesium dichloride and the ammonium chloride are reacted with each other at a weight ratio of at maximum 79:21.

7. A method as claimed in claim 6, in which a slight stoichiometric excess of ammonium chloride is used.

8. A method as claimed in any one of the above claims, in which the gas flow is formed from nitrogen gas.

9. A method as claimed in any one of claims 4 to 8, in which stage (d) includes a first heating step in which the the complex salt or complex compound is heated to 100 to 300°C, preferably to approximately 200°C, and a second heating step in which the salt or compound is heated to 400 to 500°C, preferably to approximately 450°C.

10. A method as claimed in claim 9, in which the duration of the first heating step is approximately one hour and the duration of the second heating step is approximately six hours.

11. A method as claimed in any one of claims 1 to 8, in which the recovery medium into which the gas in stage (b) carries the drops of the complex compound or complex salt is n-heptane.

12. The use of a carrier prepared by a method as claimed in any one of claims 1 to 11, as a support for a catalyst for a Ziegler-Natta type polymerization reaction.

## Patentansprüche

1. Verfahren zur Herstellung von Trägern mit Aktivierungskapazität für Ziegler-Natta-Polymerisationskatalysatoren durch chemische und physikalische Modifikation seiner Struktur mit den Schritten:
a) ein Trägermaterial und eine Substanz, welche zur Komplexbildung mit dem Trägermaterial geeignet ist, werden getrennt geschmolzen,
b) das Trägermaterial und die zur Komplexbildung geeignete Substanz werden in geschmolzenem Zustand miteinander umgesetzt, wobei ein Strom eines inerten Gases auf die Reaktionsmischung gerichtet wird, welcher die Reaktionsmischung in die Form eines Tropfen-Sprühnebels bringt,
c) das Reaktionsprodukt wird unter Ausbildung einer aus Partikeln bestehenden, thermisch zersetzbaren Komplexverbindung oder eines Komplexsalzes abgekühlt, und
d) die Komplexverbindung oder das Komplexsalz werden so wärmebehandelt, daß mindestens die zur Komplexbildung geeignete Substanz teilweise oder vollständig von dem Trägermaterial getrennt wird.

2. Verfahren nach Anspruch 1, bei welchem das Trägermaterial eine Magnesiumverbindung, vorzugsweise das Hexahydrat von Magnesiumdichlorid ist.

3. Verfahren nach Anspruch 1 oder 2, bei welchem die Verbindung, die zur Komplexbildung mit dem Trägermaterial geeignet ist, eine Ammoniumverbindung, vorzugsweise Ammoniumchlorid, ist.

4. Verfahren nach einem der obigen Ansprüche, bei welchem das Trägermaterial das Hexahydrat von Magnesiumdichlorid und die Verbindung, die mit ihm zur Komplexbildung geeignet ist, Ammoniumchlorid ist, in welchem Falle im Schritt (b) ein Komplexsalz gebildet wird, welches die Formel MgCl₂/(NH₄Cl).6H₂O besitzt.

5. Verfahren nach Anspruch 4, bei welchem das Hexyhydrat des Magnesiumdichlorids getrennt bei einer Temperatur oberhalb von 118° C, vorzugsweise innerhalb des Bereiches zwischen 130 und 140° C, geschmolzen wird, bei welchem dem Ammoniumchlorid vorzugsweise unter einem Verhältnis von ungefähr 1:1 Wasser zugegeben wird und bei welchem diese Mischung getrennt auf eine Temperatur erwärmt wird, die über ungefähr 100° C, vorzugsweise innerhalb des Bereiches zwischen 110 und 130° C, liegt.

6. Verfahren nach Anspruch 4 oder 5, bei welchem das Hexahydrat von Magnesiumdichlorid und das Ammoniumchlorid miteinander in einem Gewichtsverhältnis von maximal 79: 21 umgesetzt werden.

7. Verfahren nach Anspruch 6, bei welchem ein geringfügiger stöchiometrischer Überschuß von Ammoniumchlorid verwendet wird.

8. Verfahren nach einem der obigen Ansprüche, bei welchem die Gasströmung von Stickstoffgas gebildet wird.

9. Verfahren nach einem der Ansprüche 4 bis 8, bei welchem der Schritt (d) einen ersten Erwärmungsschritt enthält, in welchem das Komplexsalz oder die Komplexverbindung auf 100 bis 300° C, vorzugsweise auf ungefähr 200° C, erwärmt wird, sowie einen zweiten Erwärmungsschritt, in welchem das Salz oder die Verbindung auf 400 bis 500° C, vorzugsweise auf ungefähr 450° C, erwärmt wird.

10. Verfahren nach Anspruch 9, bei welchem die Dauer des ersten Erwärmungsschrittes ungefähr eine Stunde, und die Dauer des zweiten Erwärmungsschrittes ungefähr sechs Stunden beträgt.

11. Verfahren nach einem der Ansprüche 1 bis 8, bei welchem das Auffangmedium, in welches das Gas im Schritt (b) die Tropfen der Komplexverbindung oder des Komplexsalzes einträgt, n-Heptan ist.

12. Verwendung eines Trägers, hergestellt in einem Verfahren nach einem der Ansprüche 1 bis 11, als Träger für einen Katalysator für eine Ziegler-Natta-Polymerisationsreaktion.

## Revendications

1. Procédé pour la préparation d'un support aux propriétés d'activateur pour catalyseur de polymérisation, de type Ziegler-Natta, par modification de sa structure chimique et physique comprenant les étapes consistant à :
(a) faire fondre séparément un matériau porteur et une substance complexable au matériau porteur,
(b) faire réagir à l'état fondu le matériau porteur et la substance complexable en dirigeant un courant de gaz inerte vers le mélange réactionnel, le courant gazeux transformant le mélange réactionnel sous la forme d'un brouillard de gouttelettes,
(c) faire refroidir le produit de la réaction en vue d'obtenir un complexe particulaire décomposable thermiquement ou un sel de ce complexe, et
(d) traiter à chaud ledit complexe ou sel de complexe pour séparer au moins partiellement ou complètement au moins la substance complexable du matériau porteur.

2. Procédé selon la revendication 1, dans lequel le matériau porteur est un dérivé du magnésium préférentiellement le dichlorure de magnésium hexahydraté.

3. Procédé selon la revendication 1 ou 2, dans lequel le composé complexable au matériau porteur est un dérivé ammonium, préférentiellement le chlorure d'ammonium.

4. Procédé selon l'une quelconque des revendications précédentes, dans lequel le matériau porteur est le dichlorure de magnésium hexahydraté et le composé complexable à celui-ci est le chlorure d'ammonium, auquel cas il se forme à l'étape (b) un sel de complexe ayant pour formule MgCl₂/(NH₄Cl).6H₂O.

5. Procédé selon la revendication 4, dans lequel le dichlorure de magnésium hexahydraté est fondu séparément à une température au-dessus de 118°C préférentiellement située dans la plage allant de 130 à 140°C et de l'eau est ajoutée au chlorure d'ammonium, préférentiellement dans un rapport d'environ 1:1, et ce mélange est chauffé séparément à une température environ au-dessus de 100°C, préférentiellement située dans la plage allant de 110 à 130°C.

6. Procédé selon la revendication 4 ou 5, dans lequel le dichlorure de magnésium hexahydraté et le chlorure d'ammonium sont mis à réagir dans un rapport d'au plus 79:21.

7. Procédé selon la revendication 6, dans lequel un léger excès stoechiométrique de chlorure d'ammonium est utilisé.

8. Procédé selon l'une quelconque des revendications précédentes, dans lequel le courant gazeux est formé à partir d'azote gazeux.

9. Procédé selon l'une quelconque des revendications 4 à 8, dans lequel l'étape (d) comprend une première étape de chauffage dans laquelle le sel de complexe ou le complexe est chauffé de 100 à 300°C, préférentiellement approximativement à 200°C, et une seconde étape de chauffage dans laquelle le sel ou le complexe est chauffé de 400 à 500°C préférentiellement approximativement à 450°C.

10. Procédé selon la revendication 9, dans lequel la durée de la première étape de chauffage est approximativement d'une heure et la durée de la seconde étape de chauffage est approximativement de six heures.

11. Procédé selon l'une quelconque des revendications 1 à 8, dans lequel le milieu de récupération dans lequel le gaz entraîne, à l'étape (b), les gouttes de complexe ou de sel de complexe est le n-heptane.

12. Utilisation d'un support préparé selon l'une quelconque des revendications 1 à 11 comme support pour un catalyseur de type Ziegler-Natta pour réaction de polymérisation.
